# EUROPÄISCHE PATENTSCHRIFT

(11) **EP 3 412 898 B1**
(45) Veröffentlichungstag und Bekanntmachung des Hinweises auf die Patenterteilung: **05.06.2024**
(21) Anmeldenummer: 18168685.8
(22) Anmeldetag: 23.04.2018
(51) Int. Cl.: F02D 41/00, F02D 13/02, F02D 41/02

(54) **VERFAHREN ZUM BETREIBEN EINES VERBRENNUNGSMOTORS UND VORRICHTUNG HIERZU**
METHOD FOR OPERATING A COMBUSTION ENGINE AND DEVICE FOR SAME
PROCÉDÉ DE FONCTIONNEMENT D'UN MOTEUR À COMBUSTION INTERNE ET DISPOSITIF CORRESPONDANT

(30) Priorität: 18.05.2017 DE 102017004782
(43) Veröffentlichungstag der Anmeldung: 12.12.2018
(73) Patentinhaber: MAN Truck & Bus SE, 80995 München (DE)
(72) Erfinder: Hyna, Dominic, 90763 Fürth (DE); Hirschmann, Steffen, 91413 Neustadt an der Aisch (DE)
(74) Vertreter: v. Bezold & Partner Patentanwälte - PartG mbB

(56) Entgegenhaltungen:
- EP-A1- 2 418 369
- EP-A2- 2 009 264
- DE-A1-102011 075 537
- DE-A1-102012 011 149
- DE-A1-102013 113 167
- GB-A- 2 394 750
- Richard Van Basshuysen: "Handbuch Verbrennungsmotoren - 10.5.4.4 Miller-Verfahren", , 1. Januar 2010 (2010-01-01), Seiten 517-519, XP055514303, Wiesbaden ISBN: 978-3-8348-0699-4 Gefunden im Internet: URL:https://books.google.nl/books?id=tz_wT ducxcMC&pg=PA517&lpg=PA517&dq=Miller+zylin derindividuell&source=bl&ots=R_kQtS6wI_&si g=iXb6I1JvYrjHslXqbKKpjUYXtlM&hl=en&sa=X&v ed=2ahUKEwjs7p-s-_vdAhVOKlAKHVa7BTEQ6AEwAH oECAkQAQ#v=onepage&q&f=false [gefunden am 2018-10-11]

## Beschreibung

Die Erfindung betrifft ein Verfahren zum Betreiben eines Verbrennungsmotors und einen variablen Ventiltrieb.

Im Nutzfahrzeugbereich ist ein effektives Abgastemperaturmanagement erforderlich, um die Funktion eines Abgasnachbehandlungssystems auch in schwachlastigen Betriebszuständen des Verbrennungsmotors zu gewährleisten. Typischerweise wird eine Einlassluft-Drosselklappe verwendet, um einen Luftdurchsatz zu verringern und somit eine Abgastemperatur zu erhöhen, wenn eine erhöhte Abgastemperatur zum effektiven Betreiben des Abgasnachbehandlungssystems gewünscht ist.

Durch den Einsatz der Drosselklappe kann die Abgastemperatur zwar angehoben werden, jedoch geht dies mit einem Kraftstoffverbrauchsanstieg einher.

Es ist ferner bekannt, dass ein Verbrennungsmotor in einem Millerbetrieb betreibbar ist. Beim Millerbetrieb werden die Schließzeitpunkt der Einlassventile vorgezogen, sodass weniger Luft in den Zylinder gelangt. Insbesondere in schwachlastigen Betriebszuständen des Verbrennungsmotors kann im Millerbetrieb die Kraftstoffeffizienz erhöht werden, da weniger Arbeit für den Ladungswechsel erforderlich ist.

Das Handbuch Verbrennungsmotoren in der Auflage vom 1. Januar 2010 von Richard Van Basshuysen offenbart, dass mittels eines Lufttaktventils ein Millerbetrieb auf einfache Weise angepasst werden kann, indem der Schließzeitpunkt des Lufttaktventils betriebspunktspezifisch sowie zylinderindividuell und zylinderselektiv eingestellt wird.

Die DE 10 2012 011149 A1 offenbart, dass bei einem Einspritzsystem für kompressionsgezündete Dieselmotoren zur NOx-Reduzierung vorgesehen ist, neben einer konventionellen Einspritzdüse eine zusätzliche Einspritzdüse anzuordnen. Hierbei wird über die zusätzliche Einspritzdüse zu einem ersten Einspritzzeitpunkt eine erste Brennstoffmenge auf eine Verdampfungsoberfläche aufgebracht, so dass ein mageres Verbrennungsgemisch entsteht. Weiterhin wird zu einem zweiten Einspritzzeitpunkt eine Brennstoffmenge in die Brennkammer eingebracht, so dass ein fettes Verbrennungsgemisch entsteht.

Die DE 10 2011 075537 A1 offenbart ein Schiebenockensystem.

Die EP 2 418 369 A1 offenbart ein System zum Steuern der Abgastemperatur eines Verbrennungsmotors mit einer Abgasnachbehandlungsvorrichtung. Das System enthält ein Verbrennungsluftstromsteuerventil, das zum Positionieren stromaufwärts eines Lufteinlasses einer Verbrennungskammer ausgelegt ist. Das System umfasst ferner eine Steuereinheit zum Steuern des Luftstromsteuerventils und einen Abgastemperatursensor, der zum Positionieren stromaufwärts von und benachbart zu der Abgasnachbehandlungsvorrichtung ausgelegt ist. Im Betrieb kommuniziert der Temperatursensor mit der Steuereinheit und die Steuereinheit mit dem Luftstromsteuerventil. Das Luftstromsteuerventil des Systems ist insbesondere so ausgelegt, dass es mit einer Frequenz betrieben werden kann, die der Frequenz des Verbrennungszyklus entspricht.

Die GB 2 394 750 A offenbart einen Verbrennungsmotor und ein Verfahren zum Pumpen von Luft zu einer Emissions-Nachbehandlungsvorrichtung des Motors. Der Motor ist ein mehrzylindriger Verbrennungsmotor mit Zylinderabschaltung, die sowohl am Einlass- als auch am Auslassventil von mindestens zwei der Zylinder betätigt werden kann. Beim Kaltstart des Motors wird Luft in den mindestens einen Zylinder gesaugt, wenn er durch die freigegebenen Ventile deaktiviert ist, und dann in das Abgassystem gepumpt, und wenn die Temperatur innerhalb der Nachbehandlungsvorrichtung ein vorgegebenes Niveau erreicht, werden die freigegebenen Ventile deaktiviert.

Die DE 10 2013 113167 A1 betrifft ein Verfahren zum Betreiben eines Verbrennungsmotors, wobei der Verbrennungsmotor einen Zylinder mit einem Einlassventil zum gesteuerten Zuführen von Frischluft aus einem Saugrohr aufweist. In einer bestimmten Betriebsart wird eine gewünschte Luftfüllung durch Vorgeben eines Schließzeitpunkts des Einlassventils in einem Ansaugtakt bei konstantem Saugrohrdruck eingestellt.

Die EP 2 009 264 A2 offenbart eine Steuervorrichtung für eine Brennkraftmaschine, die einen Turbolader umfasst, dessen Turbodurchsatz variabel ist, und ein Einlassventil, das mit einem variablen Ventilmechanismus versehen ist und in dem ein Spiegelzyklus durchgeführt wird.

Der Erfindung liegt die Aufgabe zu Grunde, ein Verfahren zum Betreiben eines Verbrennungsmotors mit einer verbesserten Kraftstoffeffizienz und/oder eine verbesserte Steuerbarkeit vorzusehen.

Die Aufgabe wird gelöst durch ein Verfahren und einen variablen Ventiltrieb gemäß den unabhängigen Ansprüchen. Vorteilhafte Weiterbildungen sind in den abhängigen Ansprüchen und der Beschreibung angegeben.

Das Verfahren zum Steuern eines Verbrennungsmotors mit mehreren Zylindern, die jeweils mindestens ein Einlassventil aufweisen, wobei die Einlassventile zylinderselektiv ansteuerbar sind, weist das Erfassen mindestens eines Betriebsparameters des Verbrennungsmotors auf. Der Betriebsparameter umfasst einen Betriebsparameter eines Turboladers des Verbrennungsmotors. Der Betriebsparameter kann ferner eine Abgastemperatur, eine Last des Verbrennungsmotors und/oder einen Luftdurchsatz umfassen. Das Verfahren weist das Bestimmen einer ausgewählten Anzahl von Zylindern, bei denen ein Vorziehen eines Schließzeitpunkts vor Erreichen eines unteren Totpunkts einer Kolbenbewegung im Einlasstakt, insbesondere eine Miller-Steuerzeit, des jeweils mindestens einen Einlassventils gewünscht ist, basierend auf dem mindestens einen erfassten Betriebsparameter auf. Das Verfahren weist das Betreiben des Verbrennungsmotors mit der ausgewählten Anzahl von Zylindern mit vorgezogenem Schließzeitpunkt des jeweils mindestens einen Einlassventils auf.

Das Verfahren ermöglicht eine zylinderselektive Schaltung in den Millerbetrieb. Damit können in bestimmten Lastbereichen des Verbrennungsmotors Verbrauchsvorteile erzielt werden. Zusätzlich ist es möglich, den Betrieb eines Turboladers innerhalb eines gewünschten Bereichs zu halten und/oder eine Abgastemperatur variabel zu verändern.

Im Millerbetrieb kann ein Schließzeitpunkt der Einlassventile insbesondere vor dem unteren Totpunkt der Kolbenbewegung liegen. Vorzugsweise kann der Schließzeitpunkt in einem Bereich von 20° KW (Kurbelwinkel), bevorzugt 30° KW vor dem unteren Totpunkt der Kolbenbewegung liegen. Der Schließzeitpunkt bezieht sich insbesondere auf den Zeitpunkt, ab dem das Einlassventil vollständig geschlossen ist.

Insbesondere kann auf eine Verstellung einer Einlassluft-Drosselklappe und/oder eine Öffnung eines Wastegate-Ventils eines Turboladers durch das Betreiben des Verbrennungsmotors mit der ausgewählten Anzahl von Zylindern mit vorgezogenem Schließzeitpunkt verzichtet werden.

In einer besonders bevorzugten Ausführungsform weist der Verbrennungsmotor keine Einlassluft-Drosselklappe und/oder kein Wastegate-Ventil für den Turbolader (die Abgasturbine des Turboladers) auf.

Erfindungsgemäß ist die Anzahl der ausgewählten Zylinder in einem vorgegebenen Betriebsbereich des Turboladers kleiner als eine Gesamtzahl der mehreren Zylinder und/oder größer Null. In einer Ausführungsform ist die Anzahl der ausgewählten Zylinder in einem vorgegebenen Lastbereich des Verbrennungsmotors und/oder einem vorgegebenen Temperaturbereich des Abgases kleiner als eine Gesamtzahl der mehreren Zylinder und/oder größer Null. Damit kann nur ein Teil der Zylinder mit einem vorgezogenen Schließzeitpunkt der Einlassventile betrieben werden, während ein anderer Teil der Zylinder im Normalbetrieb betrieben wird.

Im Normalbetrieb können die Einlassventile insbesondere zum Zeitpunkt des Erreichens des unteren Totpunkts der Kolbenbewegung oder danach, vorzugsweise in einem Bereich zwischen 0° KW und 30° KW nach dem unteren Totpunkt der Kolbenbewegung geschlossen werden.

Erfindungsgemäß verändert sich die ausgewählte Anzahl von Zylindern in einem vorgegebenen Betriebsbereich des Turboladers mit veränderndem Betriebspunkt des Turboladers. In einer bevorzugten Ausführungsform verändert sich die ausgewählte Anzahl von Zylindern in einem vorgegebenen Lastbereich des Verbrennungsmotors und/oder einem vorgegebenen Temperaturbereich des Abgases mit verändernder Last der Verbrennungsmotors und/oder verändernder Temperatur des Abgases, insbesondere sukzessive.

In einer weiteren Ausführungsform wird die ausgewählte Anzahl von Zylindern zum variablen Anpassen einer Abgastemperatur, zum variablen Anpassen eines Betriebspunkts des Turboladers und/oder zum variablen Anpassen eines Luftdurchsatzes bestimmt.

Alternativ oder zusätzlich werden die restlichen Zylinder im Normalbetrieb betrieben und/oder ein Schließzeitpunkt der Einlassventile der restlichen Zylinder liegt im Bereich des Erreichens des unteren Totpunkts der Kolbenbewegung.

In einem Ausführungsbeispiel entspricht die ausgewählte Anzahl von Zylindern in einem Schwachlastbereich des Verbrennungsmotors einer Gesamtzahl der Zylinder. Alternativ oder zusätzlich nimmt die ausgewählte Anzahl von Zylindern oberhalb von einem Schwachlastbereich des Verbrennungsmotors mit zunehmender Last des Verbrennungsmotors, insbesondere sukzessive, ab. Damit können im Schwachlastbereich alle Zylinder zur Erzielung von Kraftstoffverbrauchsvorteilen mit einem vorgezogenen Schließzeitpunkt betrieben werden. Oberhalb des Schwachlastbereichs können die Zylinder nach und nach in den Normalbetrieb geschaltet werden, um einen kraftstoffeffizienten Betrieb durch den vorgezogenen Schließzeitpunkt auszureizen.

In einem weiteren Ausführungsbeispiel nimmt die ausgewählte Anzahl von Zylindern unterhalb von einem Mittellastbereich des Verbrennungsmotors mit abnehmender Last des Verbrennungsmotors, insbesondere sukzessive, zu. Alternativ oder zusätzlich nimmt die ausgewählte Anzahl von Zylindern in einem Übergangslastbereich von einem Schwachlastbereich zu einem Mittellastbereich der Verbrennungsmotors mit zunehmender Last, insbesondere sukzessive, ab und/oder mit abnehmender Last, insbesondere sukzessive, zu. Damit können unterhalb des Mittellastbereichs die Zylinder nach und nach in einen Betrieb mit vorgezogenem Schließzeitpunkt geschaltet werden, um einen kraftstoffeffizienten Betrieb durch den vorgezogenen Schließzeitpunkt auszureizen.

In einer Ausführungsvariante nimmt die ausgewählte Anzahl von Zylindern in einem Volllastbereich des Verbrennungsmotors mit zunehmender Last des Verbrennungsmotors, insbesondere sukzessive, zu und/oder mit abnehmender Last des Verbrennungsmotors, insbesondere sukzessive, ab. Dadurch kann ein Luftdurchsatz im Volllastbereich verringert werden, wodurch ein Turbolader innerhalb seiner Betriebsgrenzen gehalten werden kann, ohne das Wastegate-Ventil zu öffnen. Dadurch kann Kraftstoff eingespart werden.

Vorzugsweise liegt der Schwachlastbereich in einem Bereich kleiner als ungefähr 25 %, insbesondere kleiner als ungefähr 15 %, eines maximalen effektiven Mitteldrucks des Verbrennungsmotors. Der Übergangslastbereich liegt insbesondere in einem Bereich zwischen ungefähr 5 % und ungefähr 60 %, insbesondere zwischen ungefähr 15 % und ungefähr 50 %, des maximalen effektiven Mitteldrucks des Verbrennungsmotors. Der Mittellastbereich liegt vorzugsweise in einem Bereich zwischen ungefähr 40 % und ungefähr 90 %, insbesondere zwischen ungefähr 50 % und ungefähr 80 %, des maximalen effektiven Mitteldrucks des Verbrennungsmotors. Der Volllastbereich liegt beispielsweise in einem Bereich größer als ungefähr 70 %, insbesondere größer als ungefähr 80 %, des maximalen effektiven Mitteldrucks des Verbrennungsmotors.

Alternativ oder zusätzlich liegt der Schwachlastbereich in einem Bereich kleiner als 5 bar, insbesondere kleiner als 4 bar, effektiver Mitteldruck. Der Mittellastbereich liegt beispielsweise in einem Bereich größer als 6 bar, insbesondere größer als 7 bar, vorzugsweise größer als 8 bar, effektiver Mitteldruck. Der Übergangslastbereich liegt beispielsweise zwischen dem Schwachlastbereich und dem Mittellastbereich. Der Volllastbereich liegt vorzugsweise oberhalb des Mittellastbereichs.

In einer Weiterbildung nimmt die ausgewählte Anzahl von Zylindern bei Überschreiten eines Schwellwerts eines Betriebsparameters des Turboladers, bei Betreiben des Turboladers oberhalb eines gewünschten Betriebsbereichs und/oder bei Überschreiten eines Luftdurchsatzschwellwertes, insbesondere sukzessive, zu. Alternativ oder zusätzlich nimmt die ausgewählte Anzahl von Zylindern bei Unterschreiten eines Schwellwerts eines Betriebsparameters des Turboladers, bei Betreiben des Turboladers unterhalb eines gewünschten Betriebsbereichs und/oder bei Unterschreiten eines Luftdurchsatzschwellwertes, insbesondere sukzessive, ab. Damit kann ein Turbolader innerhalb eines gewünschten Betriebsbereichs gehalten werden, ohne dass ein Wastegate-Ventil des Turboladers geöffnet werden muss.

In einer Ausführungsform nimmt die ausgewählte Anzahl von Zylindern bei Unterschreiten eines Schwellwerts der Abgastemperatur, insbesondere sukzessive, zu und/oder bei Überschreiten eines Schwellwerts der Abgastemperatur, insbesondere sukzessive, ab. Alternativ oder zusätzlich wird die ausgewählte Anzahl von Zylindern so bestimmt wird, dass die Abgastemperatur in einem Betriebstemperaturbereich oder einem Regenerationstemperaturbereich einer Abgasnachbehandlungseinrichtung, insbesondere ein Katalysator, vorzugsweise ein SCR-Katalysator (engl. selective catalytic reduction) und/oder ein Oxidationskatalysator, und/oder ein Partikelfilter, des Verbrennungsmotors liegt. Damit kann eine Temperatur des Abgases durch zylinderselektives Schalten in den Millerbetrieb variabel eingestellt werden.

In einer weiteren Ausführungsform wird ein Kraftstoffeinspritzzeitpunkt bei der ausgewählten Anzahl von Zylinder verändert, insbesondere vorgezogen, und/oder eine Kraftstoffeinspritzmenge bei den ausgewählten Zylindern verändert, insbesondere verringert. Damit kann die Kraftstoffzufuhr insbesondere an den Millerbetrieb angepasst und weitere Vorteile hinsichtlich der Kraftstoffeffizienz erzielt werden.

In einem weiteren Ausführungsbeispiel wird basierend auf der gewünschten Anzahl von Zylindern eine Gruppe von Zylindern, deren Anzahl der gewünschten Anzahl entspricht, gebildet, bei denen der Schließzeitpunkt des Einlassventils vorgezogen wird. Eine Zuordnung von Zylindern zu der Gruppe erfolgt rollierend. Folglich können immer andere Zylinder im Millerbetrieb betrieben werden, sodass ein Verschleiß des Umschaltsystems unter den Zylinder vergleichmäßigt werden kann.

In einer weiteren Ausführungsvariante weist der Verbrennungsmotor einen variablen Ventiltrieb, insbesondere mehrere Schiebenockensysteme für die mehreren Zylinder, auf. Mittels des variablen Ventiltriebs wird eine zylinderselektive Verstellung der Steuerzeiten der Einlassventile zum Betreiben des Verbrennungsmotors mit der ausgewählten Anzahl von Zylindern mit vorgezogenem Schließzeitpunkt des jeweils mindestens einen Einlassventils vorgenommen. Insbesondere das Schiebenockensystem stellt ein schnelles und zuverlässiges System zum Umschalten zwischen verschiedenen Motorbetriebsarten dar.

Vorzugsweise weist jedes Schiebenockensystem einen auf einer Nockenwelle des Verbrennungsmotors drehfest und axial verschiebbar angeordneten Nockenträger mit einem ersten Nocken für einen Normalbetrieb und einen in einer Längsrichtung der Nockenwelle versetzt angeordneten zweiten Nocken zum Vorziehen des Schließzeitpunkts des mindestens einen Einlassventils auf. Das Schiebenockensystem setzt wahlweise den ersten Nocken und das mindestens eine Einlassventil in Wirkverbindung oder den zweiten Nocken und das mindestens eine Einlassventil in Wirkverbindung. Der zweite Nocken schließt das mindestens eine Einlassventil früher als der erste Nocken.

Die Erfindung betrifft zusätzlich einen variablen Ventiltrieb für einen mehrere Zylinder aufweisenden Verbrennungsmotor eines Kraftfahrzeugs, insbesondere Nutzfahrzeugs. Der variable Ventiltrieb weist mindestens ein Einlassventil für jeden Zylinder des Verbrennungsmotors auf. Der variable Ventiltrieb weist eine Nockenwelle und mehrere Schiebenockensysteme für die mehreren Zylinder auf. Jedes Schiebenockensystem weist einen Nockenträger, der auf der Nockenwelle drehfest und axial verschiebbar angeordnet ist und einen ersten Nocken und einen zweiten Nocken aufweist, auf. Der erste Nocken und der zweite Nocken sind in einer Längsrichtung der Nockenwelle versetzt angeordnet. Das Schiebenockensystem ist insbesondere zum Durchführen des hierin offenbarten Verfahrens ausgebildet. Der variable Ventiltrieb weist eine Steuereinheit, die dazu ausgebildet ist, das Verfahren wie hierin offenbart durchzuführen.

Der Begriff "Steuereinheit" bezieht sich auf eine Steuerelektronik, die je nach Ausbildung Steuerungsaufgaben und/oder Regelungsaufgaben übernehmen kann.

Vorzugsweise ist der Nockenträger axial verschiebbar zwischen einer ersten Axialposition und einer zweiten Axialposition auf der Nockenwelle angeordnet. Der Ventiltrieb weist ferner eine Übertragungsvorrichtung auf. In der ersten Axialposition des Nockenträgers ist die Übertragungsvorrichtung in Wirkverbindung zwischen dem ersten Nocken und dem mindestens einen Einlassventil. In der zweiten Axialposition des Nockenträgers ist die Übertragungsvorrichtung in Wirkverbindung zwischen dem zweiten Nocken und dem mindestens einen Einlassventil. Der erste Nocken ist für einen Normalbetrieb des Verbrennungsmotors ausgebildet, bei dem der erste Nocken das mindestens eine Einlassventil bei Erreichen eines unteren Totpunkts einer Kolbenbewegung schließt. Der zweite Nocken ist für einen Millerbetrieb des Verbrennungsmotors ausgebildet, bei dem der zweite Nocken das mindestens eine Einlassventil vor Erreichen des unteren Totpunkts der Kolbenbewegung schließt.

Der erste Nocken und der zweite Nocken können insbesondere eine unterschiedliche Nockenkontur aufweisen und/oder in einer Umfangsrichtung des Nockenträgers versetzt zueinander angeordnet sein.

Vorzugsweise weist der variable Ventiltrieb zwei Einlassventile je Zylinder auf, die beide wahlweise von dem ersten Nocken oder dem zweiten Nocken betätigt werden.

In einer Ausführungsvariante weist der Nockenträger eine erste Eingriffsspur zum axialen Verschieben des Nockenträgers in eine erste Richtung auf. Die erste Eingriffsspur erstreckt sich insbesondere spiralförmig.

Die erste Eingriffsspur ist dazu ausgebildet, im Eingriff mit einem Aktor den Nockenträger axial zu verschieben, zum Beispiel von der ersten Axialposition zu der zweiten Axialposition oder von der zweiten Axialposition zu der ersten Axialposition.

In einem besonders bevorzugten Ausführungsbeispiel ist die erste Eingriffsspur in einem nockenfreien Abschnitt angeordnet.

In einer Ausführungsform weist der Nockenträger eine zweite Eingriffsspur zum axialen Verschieben des Nockenträgers in eine zweite Richtung, die der ersten Richtung entgegengesetzt ist, auf.

Die zweite Eingriffsspur kann insbesondere dazu ausgebildet sein, im Eingriff mit einem Aktor den Nockenträger axial zu verschieben, zum Beispiel von der ersten Axialposition zu der zweiten Axialposition oder von der zweiten Axialposition zu der ersten Axialposition. Die erste und zweite Eingriffsspur bieten eine zuverlässige Möglichkeit zum Verschieben des Nockenträgers.

In einer weiteren Ausführungsform weist der variable Ventiltrieb einen ersten Aktor auf, der dazu ausgebildet ist, selektiv in Eingriff mit der ersten Eingriffsspur zum Verschieben des Nockenträgers in die erste Richtung zu gelangen. Alternativ oder zusätzlich weist der variable Ventiltrieb einen zweiten Aktor auf, der dazu ausgebildet ist, selektiv in Eingriff mit der zweiten Eingriffsspur zum Verschieben des Nockenträgers in die zweite Richtung zu gelangen.

Vorteilhafterweise weist die Nockenwelle eine Arretierungsvorrichtung mit einem elastisch vorgespannten Element auf, das in der ersten Axialposition des Nockenträgers in eine erste Ausnehmung im Nockenträger eingreift und in der zweiten Axialposition des Nockenträgers in eine zweite Ausnehmung im Nockenträger eingreift.

Die Arretierungsvorrichtung hat den Vorteil, dass der Nockenträger in der ersten und zweiten Axialposition festgesetzt werden kann. Der Nockenträger kann sich somit nicht unbeabsichtigt entlang einer Längsrichtung der Nockenwelle verschieben.

In einem weiteren Ausführungsbeispiel ist die erste Übertragungseinrichtung und/oder die zweite Übertragungseinrichtung als ein Hebel, insbesondere ein Kipphebel oder ein Schlepphebel, oder ein Stößel ausgebildet. Ein Schlepphebel kann beispielsweise bei einer obenliegenden Nockenwelle verwendet werden. Ein Kipphebel kann beispielsweise bei einer untenliegenden Nockenwelle verwendet werden.

In einer weiteren Ausführungsvariante ist die Nockenwelle als eine obenliegende Nockenwelle oder eine untenliegende Nockenwelle angeordnet. Alternativ oder zusätzlich ist die Nockenwelle Teil eines Doppelnockenwellensystems ist, das zusätzlich eine weitere Nockenwelle zur Betätigung mindestens eines Auslassventils aufweist.

In einer weiteren Ausführungsform kann die Nockenwelle der Einlassventile einen Phasensteller aufweisen. Der Phasensteller ist dazu ausgebildet, einen Drehwinkel der Nockenwelle relativ zu einem Drehwinkel einer Kurbelwelle zu verstellen. Somit kann der Phasensteller eine Verstellung der Steuerzeiten für die jeweiligen Ventile ermöglichen. Der Phasenversteller kann beispielsweise als hydraulischer Phasenversteller, insbesondere als eine Schwenkmotorphasenversteller, ausgebildet sein. Eine solche Ausführungsform hat den Vorteil, dass die Flexibilität des Systems durch die Kombination mit dem verschiebbaren Nockenträger weiter gesteigert wird.

Letztlich betrifft die Erfindung auch ein Kraftfahrzeug, insbesondere Nutzfahrzeug, mit einem variablen Ventiltrieb wie hierin offenbart. Das Nutzfahrzeug kann beispielsweise ein Lastkraftwagen oder ein Omnibus sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines beispielhaften variablen Ventiltriebs;
- Figur 2: eine Längsschnittansicht der Nockenwelle;
- Figur 3: ein beispielhaftes Verfahren zum Betreiben eines Verbrennungsmotors; und
- Figur 4: ein Motorkennfeld.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

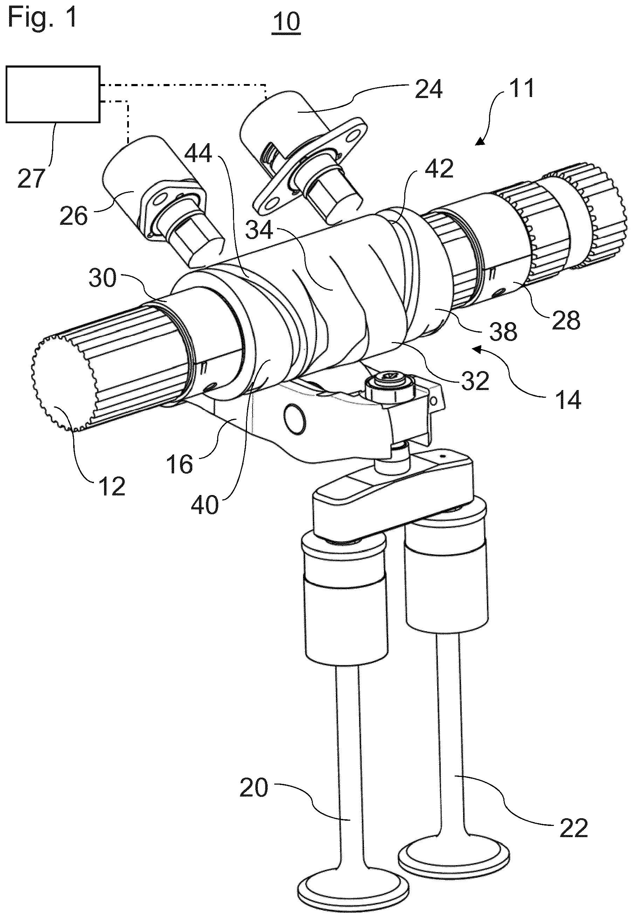

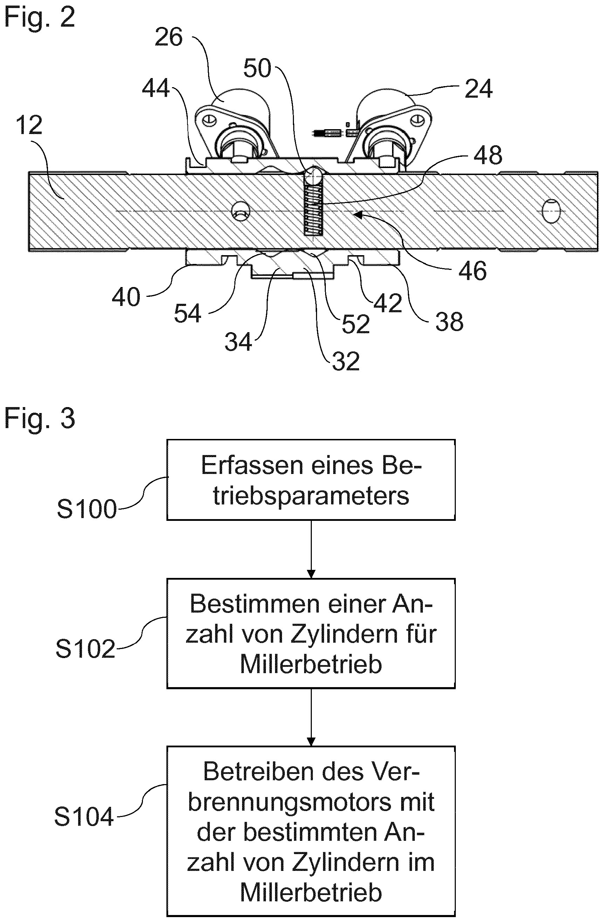

Nachfolgend ist unter Bezugnahme auf Figur 1 und Figur 2 zunächst ein System beschrieben, mit dem die Einlassventile eines Verbrennungsmotors zylinderselektiv betätigt werden können. Zusätzlich ermöglicht das System ein zylinderselektives Umschalten zwischen verschiedenen Ventilsteuerkurven für die Einlassventile. Bei dem beispielhaften System handelt es sich um einen variablen Ventiltrieb, der eine Mehrzahl von Schiebenockensystemen aufweist. Fachleute werden erkennen, dass auch andere Systeme zum zylinderselektiven Ansteuern der Einlassventile verwendet werden können, um das hierin offenbarte Verfahren auszuführen.

In der Figur 1 ist ein variabler Ventiltrieb 10 gezeigt. Der variable Ventiltrieb 10 weist eine Nockenwelle 12 und einen Nockenträger 14 auf. Zusätzlich weist der variable Ventiltrieb 10 eine Übertragungsvorrichtung 16 sowie ein erstes und zweites Einlassventil 20 und 22 auf. Zudem weist der variable Ventiltrieb 10 einen ersten Aktor 24 und einen zweiten Aktor 26 auf. Der Nockenträger 14, die Übertragungsvorrichtung 16 sowie die Aktoren 24 und 26 bilden ein Schiebenockensystem 11.

Der variable Ventiltrieb 10 kann in einem Kraftfahrzeug, insbesondere einem Nutzfahrzeug, mit einem Verbrennungsmotor umfasst sein. Das Nutzfahrzeug kann beispielsweise ein Lastkraftwagen oder ein Omnibus sein.

Die Nockenwelle 12 ist als eine Eingangsnockenwelle ausgebildet, die die Eingangsventile 20 und 22 betätigt. Die Nockenwelle 12 ist Teil eines Doppelnockenwellensystems (nicht im Detail dargestellt), das zusätzlich eine Auslassnockenwelle (nicht dargestellt) zur Betätigung von einem oder mehreren Auslassventilen aufweist. Die Nockenwelle 12 ist gemeinsam mit der Auslassnockenwelle als obenliegende Nockenwelle angeordnet. Die Nockenwelle 12 und die Auslassnockenwelle bilden somit ein sogenanntes DOHC-System (engl. double overhead camshaft). Alternativ könnte die Nockenwelle 12 auch ein sogenanntes SOHC-System bilden (engl. single overhead camshaft). In anderen Ausführungsformen kann die Nockenwelle 12 auch als untenliegende Nockenwelle angeordnet sein.

Auf der Nockenwelle 12 ist der Nockenträger 14 drehfest angeordnet. Der Nockenträger 14 ist zusätzlich axial verschiebbar entlang einer Längsachse der Nockenwelle 12 angeordnet.

Der Nockenträger 14 kann zwischen einem ersten Anschlag 28 und einem zweiten Anschlag 30 axial verschiebbar sein.

Auf der Nockenwelle 12 sind mehrere Schiebenockensysteme 11 vorgesehen, sodass für jeden Zylinder des Verbrennungsmotors ein Schiebenockensystem 11 zur zylinderselektiven Betätigung des mindestens einen Einlassventils 20, 22 des jeweiligen Zylinders zur Verfügung steht.

Der Nockenträger 14 weist zwei Nocken 32 und 34 auf, die in einer Längsrichtung des Nockenträgers 14 und der Nockenwelle 12 voneinander versetzt sind. Der erste Nocken 32 und der zweite Nocken 34 sind in einem Mittelabschnitt des Nockenträgers 14 angeordnet. Der erste Nocken 32 und der zweite Nocken 34 grenzen aneinander.

Der erste Nocken 32 ist zur Betätigung der Einlassventile 20 und 22 in einem Normalbetrieb ausgebildet. Im Normalbetrieb schließen die Einlassventile 20 und 22 am Ende des Einlasstakts im Bereich eines unteren Totpunkts einer Kolbenbewegung gemäß einem Diesel- oder Ottokreisprozess.

Der zweite Nocken 34 ist für einen Betrieb mit vorgezogenem Schließzeitpunkt gegenüber dem Normalbetrieb ausgebildet. Der zweite Nocken 34 ist insbesondere für einen Millerbetrieb ausgebildet, bei dem in einem Bereich vor dem unteren Totpunkt der Kolbenbewegung gemäß einem Miller-Kreisprozess das Einlassventil früher geschlossen wird als bei einem Normalbetrieb (Diesel- oder Ottokreisprozess).

Im Millerbetrieb schließen die Einlassventile 20, 22 früher. Damit gelangt weniger Luft in den Brennraum. Dies führt einerseits dazu, dass der Verbrennungsmotor weniger Arbeit für den Ladungswechsel (d. h. Einlassen von Frischluft und Auslassen von Abgas) benötigt. Durch die verringerte Arbeit kann in bestimmten Lastbereichen eine Kraftstoffeffizienz erhöht, d. h. ein Kraftstoffverbrauch gesenkt, werden. Der Millerbetrieb kann auch dazu genutzt werden, eine Abgastemperatur zu erhöhen. Dadurch, dass weniger Luft in den Brennraum gelangt, kann bei gleichbleibender Kraftstoffeinspritzung ein Verbrennungsluftverhältnis λ verringert werden. Das Kraftstoff-Luft-Gemisch wird dadurch fetter oder reicher. Die Verbrennung des fetteren Gemischs führt zu einer Erhöhung der Abgastemperatur.

Der Nockenträger 14 weist zudem einen ersten nockenfreien Abschnitt 38 und einen zweiten nockenfreien Abschnitt 40 auf. Der erste nockenfreie Abschnitt 38 und der zweite nockenfreie Abschnitt 40 sind an gegenüberliegenden Enden des Nockenträgers 14 angeordnet. Im ersten nockenfreien Abschnitt 38 erstreckt sich eine erste Eingriffsspur (Schaltkulisse) 42 spiralförmig um eine Längsachse des Nockenträgers 14. Im zweiten nockenfreien Abschnitt 40 erstreckt sich eine zweite Eingriffsspur (Schaltkulisse) 44 spiralförmig um die Längsachse des Nockenträgers 14.

Zum Verschieben des Nockenträgers 14 zwischen den Anschlägen 28 und 30 können die Aktoren 24 und 26 mit ausfahrbaren Elementen (nicht im Detail gezeigt) selektiv in die Eingriffsspuren 42, 44 eingreifen. Im Einzelnen kann der erste Aktor 24 selektiv in die erste Eingriffsspur 42 zum Verschieben des Nockenträgers 14 von einer ersten Axialposition zu einer zweiten Axialposition eingreifen. In der ersten Axialposition liegt der Nockenträger 14 an dem zweiten Anschlag 30 an. In der zweiten Axialposition liegt der Nockenträger 14 an dem ersten Anschlag 28 an. In der Figur 1 ist der Nockenträger 14 in der ersten Axialposition dargestellt. Der zweite Aktor 26 wiederum kann selektiv in die zweite Eingriffsspur 44 eingreifen. Dann wird der Nockenträger 14 von der zweiten Axialposition zu der ersten Axialposition verschoben. Der erste Aktor 24 und der zweite Aktor 26 werden von einer schematisch dargestellten Steuereinheit 27 angesteuert.

Die Verschiebung wird dadurch ausgelöst, dass das ausgefahrene Element des jeweiligen Aktors 24, 26 bezüglich einer Axialrichtung der Nockenwelle 12 ortsfest ist. Folglich wird der verschiebbare Nockenträger 14 aufgrund der Spiralform der Eingriffsspuren 42, 44 in einer Längsrichtung der Nockenwelle 12 verschoben, wenn das ausgefahrene Element in die jeweilige Eingriffsspur 42, 44 eingreift. Am Ende des Verschiebevorgangs wird das verschiebbare Element des jeweiligen Aktors 24, 26 von der jeweiligen Eingriffsspur 42, 44 entgegengesetzt zu der Ausfahrrichtung geführt und somit eingefahren. Das verschiebbare Element des jeweiligen Aktors 24, 26 gelangt außer Eingriff mit der jeweiligen Eingriffsspur 42, 44.

Die Übertragungsvorrichtung 16 stellt eine Wirkverbindung zwischen dem Nockenträger 14 und den Einlassventilen 20, 22 her. Die Einlassventile 20, 22 werden betätigt (geöffnet), wenn der erste Nocken 32 oder der zweite Nocken 34 die Übertragungsvorrichtung 16 nach unten drückt.

Befindet sich der Nockenträger 14 in der ersten Axialposition, ist die erste Übertragungsvorrichtung 16 in Wirkverbindung zwischen dem ersten Nocken 32 und den Einlassventilen 20, 22. Mit anderen Worten gesagt, ist die Übertragungsvorrichtung 16 in der ersten Axialposition des Nockenträgers 14 nicht in Wirkverbindung zwischen dem zweiten Nocken 34 und den Einlassventilen 20, 22. Die Einlassventile 20, 22 werden gemäß einer Kontur des ersten Nockens 32 betätigt. In der zweiten Axialposition des Nockenträgers 14 ist die Übertragungsvorrichtung 16 in Wirkverbindung zwischen dem zweiten Nocken 34 und den Einlassventilen 20, 22, die gemäß einer Kontur des zweiten Nockens 34 betätigt werden.

In der dargestellten Ausführungsform ist die Übertragungsvorrichtung 16 als ein Schlepphebei ausgebildet. In anderen Ausführungsformen kann die Übertragungsvorrichtung 16 als Kipphebel oder Stößel ausgebildet sein. In einigen Ausführungsformen kann die Übertragungsvorrichtung 16 einen Nockenfolger, zum Beispiel in Form einer drehbaren Rolle, aufweisen.

Unter Bezugnahme auf Figur 2 ist eine Arretierungsvorrichtung 46 gezeigt. Die Arretierungsvorrichtung 46 weist ein elastisches Element 48 und einen Sperrkörper 50 auf. Das elastische Element 48 ist in einem Sackloch der Nockenwelle 12 angeordnet. Das elastische Element 48 spannt den Sperrkörper 50 gegen den Nockenträger 14 vor. In einer Innenumfangsfläche des Nockenträgers 14 sind eine erste und zweite Ausnehmung 52 und 54 angeordnet. Zum Arretieren des Nockenträgers 14 wird der Sperrkörper 50 bspw. in die erste Ausnehmung 52 gedrückt, wenn der Nockenträger 14 in der ersten Axialposition ist. In der zweiten Axialposition des Nockenträgers 14 wird der Sperrkörper 50 in die zweite Ausnehmung 54 gedrückt.

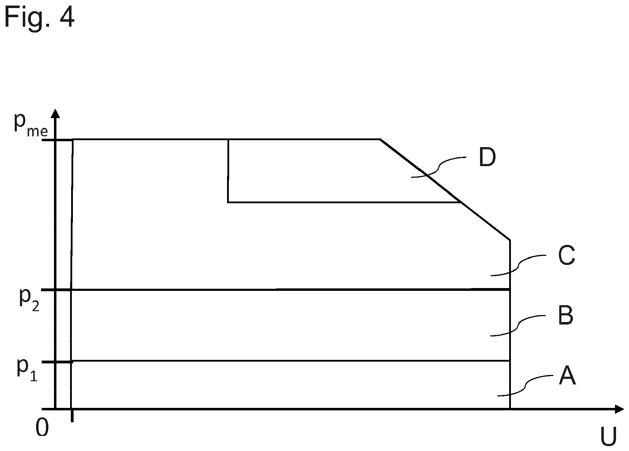

Nachfolgend sind unter Bezugnahme auf Figur 3 und 4 Verfahren zum Betreiben eines Verbrennungsmotors beschrieben. Die Verfahren beruhen auf der Erkenntnis, dass es in verschiedenen Betriebsbereichen des Verbrennungsmotors sinnvoll sein kann, dass ein Teil der Zylinder in einem Normalbetrieb und ein anderer Teil der Zylinder in einem Millerbetrieb betrieben werden.

Das Verfahren weist einen Schritt S100 auf, in dem mindestens ein Betriebsparameter des Verbrennungsmotors erfasst wird. Vorzugsweise werden eine Abgastemperatur, eine Last des Verbrennungsmotors, ein Luftdurchsatz und/oder ein Betriebsparameter eines Turboladers des Verbrennungsmotors erfasst. Die Last des Verbrennungsmotors kann beispielsweise durch einen effektiven Mitteldruck oder ein abgegebenes Drehmoment angegeben werden. Der Betriebsparameter des Turboladers kann beispielsweise eine Drehzahl des Turboladers oder ein Ladedruck des Turboladers sein.

Basierend auf dem Betriebsparameter wird im Schritt S102 bestimmt, wie viele Zylinder der Gesamtzahl der Zylinder des Verbrennungsmotors mit einem vorgezogenen Schließzeitpunkt, zum Beispiel in einem Millerbetrieb, für die jeweiligen Einlassventile betrieben werden sollen.

Zum Beispiel kann bestimmt werden, dass kein Zylinder, ein Zylinder, mehrere Zylinder oder alle Zylinder des Verbrennungsmotors mit einem vorgezogenen Schließzeitpunkt betätigt werden sollen.

Die zylinderselektive Ansteuerung der Einlassventile ermöglicht insbesondere, dass in einem vorgegebenen Lastbereich des Verbrennungsmotors, einem vorgegebenen Temperaturbereich des Abgases und/oder in einem vorgegebenen Betriebsbereich des Turboladers die Anzahl der ausgewählten Zylinder kleiner als eine Gesamtzahl der mehreren Zylinder und größer als Null ist. Zusätzlich können durch die zylinderselektive Ansteuerung sukzessive mehr oder weniger Zylinder in den Millerbetrieb geschaltet werden.

Im Schritt S104 wird die ausgewählte Anzahl von Zylindern im Millerbetrieb betrieben. Die restlichen Zylinder werden im Normalbetrieb betrieben.

Beim Bestimmen der Anzahl von Zylindern für den Millerbetrieb sind verschiedene Situationen denkbar. Beispielhaft sind nachfolgend einige Situationen beschrieben.

Beispielsweise kann in einem Schwachlastbereich des Verbrennungsmotors bestimmt werden, dass die Einlassventile aller Zylinder mit einem vorgezogenen Schließzeitpunkt zu betätigen sind. Hier werden beispielsweise die Einlassventile 20, 22 von dem zweiten Nocken 34 betätigt (siehe Figur 1). Im Schwachlastbereich kann durch den Millerbetrieb Kraftstoff eingespart werden.

In einem Mittellastbereich des Verbrennungsmotors hingegen kann bestimmt werden, dass die Einlassventile aller Zylinder mit einem normalen Schließzeitpunkt zu betätigen sind. Hier werden beispielsweise die Einlassventile 20, 22 von dem ersten Nocken 32 betätigt (siehe Figur 1). Im Mittellastbereich bringt der Millerbetrieb keine Vorteile hinsichtlich des Kraftstoffverbrauchs.

In einem Übergangslastbereich zwischen dem Schwachlastbereich und dem Mittellastbereich kann es sinnvoll sein, sukzessive weniger Einlassventile der Zylinder mit einem vorgezogenen Schließzeitpunkt zu betätigen, bis schließlich im Mittellastbereich jedes Einlassventil zu einem normalen Schließzeitpunkt im Bereich des unteren Totpunkts schließt. Die Einlassventile der Zylinder werden somit zylinderselektiv angesteuert, sodass ein Teil der Zylinder im Normalbetrieb und ein Teil der Zylinder im Millerbetrieb laufen. Die zylinderselektive Ansteuerung wird beispielsweise durch den variablen Ventiltrieb 10 mit einer Mehrzahl von Schiebenockensystemen 11 für die mehreren Zylinder des Verbrennungsmotors ermöglicht (siehe Figur 1). Der zylinderselektive Wechsel vom Millerbetrieb zum Normalbetrieb ermöglicht einen kraftstoffeffizienten Betrieb des Verbrennungsmotors im Übergangslastbereich.

In einem Volllastbereich des Verbrennungsmotors kann es ebenfalls sinnvoll sein, einen Teil oder alle Zylinder in einem Millerbetrieb zu betreiben. Der Grund hierfür liegt beim Betrieb eines Turboladers des Verbrennungsmotors. Typischerweise ist der Turbolader für einen bestimmten Betriebsbereich optimiert, der einem Teillastbereich des Verbrennungsmotors angepasst ist. Wird der Verbrennungsmotor hingegen bspw. unter Volllast betrieben, so würden die Betriebsgrenzen für den Turbolader überschritten, wenn nicht ein Wastegate-Ventil des Turboladers geöffnet werden würde. Die Öffnung des Wastegate-Ventils führt zu einem Kraftstoffverbrauchsnachteil.

Durch ein Umschalten in den Millerbetrieb im Volllastbereich des Verbrennungsmotors kann eine durch den Verbrennungsmotor in den Abgastrakt geführte Luftmasse verringert werden. Dadurch kann der Turbolader auch im Volllastbereich des Verbrennungsmotors innerhalb seines vorgegebenen Betriebsbereichs betrieben werden, ohne dass eine Öffnung des Wastegate-Ventils erforderlich ist. Damit kann die Kraftstoffeffizienz im Volllastbereich erhöht werden.

In einer bevorzugten Ausführungsform weist der Turbolader des Verbrennungsmotors kein Wastegate-Ventil auf, da der Betriebsbereich des Turboladers durch zylinderselektives Schalten in den Millerbetrieb variabel anpassbar ist.

Die Umschaltung in den Millerbetrieb im Volllastbereich kann ebenfalls sukzessive erfolgen, sodass mit zunehmender Last im Volllastbereich immer mehr Zylinder in den Millerbetrieb geschaltet werden. Die Bestimmung der Anzahl der Zylinder im Millerbetrieb kann beispielsweise basierend auf einer Last des Verbrennungsmotors und/oder einem Betriebspunkt des Turboladers basieren.

Es ist auch denkbar, dass bei einem aktuellen Betriebspunkt des Verbrennungsmotors eine erzeugte Abgastemperatur niedriger als eine gewünschte Abgastemperatur ist. Die gewünschte Abgastemperatur kann so bestimmt sein, dass ein Katalysator, zum Beispiel ein SCR-Katalysator oder ein Oxidationskatalysator, in einem (optimalen) Betriebsbereich betrieben wird. Alternativ kann die gewünschte Abgastemperatur so bestimmt sein, dass eine Regeneration einer Abgasnachbehandlungseinrichtung, zum Beispiel eines Partikelfilters, ermöglicht wird. Zum Anheben der Abgastemperatur können sukzessive Zylinder in den Millerbetrieb geschaltet werden. Die Verbrennung des fetteren Gemisches im Millerbetrieb führt zu einer höheren Abgastemperatur.

In einem bevorzugten Ausführungsbeispiel weist der Verbrennungsmotor keine Einlassluft-Drosselklappe auf, da der Luftdurchsatz durch ein zylinderselektives Schalten in den Millerbetrieb variabel anpassbar ist.

Zweckmäßig können je nach Situation bei den im Millerbetrieb betriebenen Zylindern zusätzlich die Kraftstoffeinspritzzeitpunkte und die Krafteinspritzmenge verändert werden. Insbesondere kann ein Kraftstoffeinspritzzeitpunkt gegenüber einem Normalbetrieb vorgezogen und eine Kraftstoffeinspritzmenge gegenüber einem Normalbetrieb verringert werden.

In Figur 4 ist ein beispielhaftes Motorkennfeld gezeigt. Hier ist der effektive Mitteldruck pₘₑ als Betriebsparameter für eine Last/ein Drehmoment des Verbrennungsmotors über eine Motordrehzahl U dargestellt.

Der Schwachlastbereich ist mit dem Buchstaben A angegeben und erstreckt sich bis zu einem ersten effektiven Mitteldruck p₁. Der erste effektive Mitteldruck p₁ kann beispielsweise in einem Bereich zwischen 3 bar und 5 bar, zum Beispiel bei rund 4 bar, liegen. Im Schwachlastbereich können beispielsweise alle Zylinder im Millerbetrieb betrieben werden. Dies kann Verbrauchsvorteile und eine höhere Abgastemperatur gegenüber einem Normalbetrieb bewirken.

Der Übergangslastbereich ist mit dem Buchstaben B angegeben und erstreckt sich zwischen dem ersten effektiven Mitteldruck p₁ und einem zweiten effektiven Mitteldruck p₂. Der zweite effektive Mitteldruck kann beispielsweise in einem Bereich zwischen 6 bar und 10 bar, vorzugsweise in einem Bereich zwischen 7 bar und 9 bar, insbesondere bei rund 8 bar liegen. Im Übergangslastbereich können zum Erzielen von Verbrauchsvorteilen und einer höheren Abgastemperatur mehrere Zylinder zylinderselektiv auf den Millerbetrieb geschaltet werden. Mit zunehmendem effektiven Mitteldruck werden sukzessive weniger Zylinder im Millerbetrieb betrieben.

Oberhalb des Übergangslastbereichs ist ein kombinierter Mittel- und Volllastbereich mit dem Buchstaben C angegeben. Der kombinierte Mittel- und Volllastbereich erstreckt sich oberhalb von dem zweiten effektiven Mitteldruck p₂. Hier werden die Zylinder gewöhnlich im Normalbetrieb betrieben, d. h. ohne vorgezogenen Schließzeitpunkt der Einlassventile. Allerdings können ein oder mehrere Zylinder zur Erhöhung der Abgastemperatur zylinderselektiv in den Millerbetrieb geschaltet werden. Dies kann insbesondere hinsichtlich eines Betriebstemperaturbereichs oder eines Regenerationstemperaturbereichs einer Komponente im Abgastrakt sinnvoll sein. Das Schalten in den Millerbetrieb kann mit einem Kraftstoffverbrauchsnachteil einhergehen.

Zusätzlich können einige, mehrere oder alle Zylinder auch im Mittel- und Volllastbereich C zylinderselektiv in den Millerbetrieb geschaltet werden, wie durch den Bereich mit dem Buchstaben D angegeben ist. Somit kann, wenn gewünscht, auch im Mittel- und Volllastbereich eine Reduktion des Luftdurchsatzes bewirkt werden, wenn dies gewünscht ist.

Das Verfahren kann auf vielfältige Art und Weise modifiziert werden.

Es ist bspw. denkbar, dass eine rollierende Zuordnung der Zylinder zu der Gruppe der Zylinder im Millerbetrieb vorgenommen wird, sodass nicht immer die gleichen Zylinder im Millerbetrieb betrieben werden, wenn nur ein Teil der Zylinder im Millerbetrieb betrieben wird. Damit kann ein Verschleiß der Umschaltsysteme, zum Beispiel der mehreren Schiebenockensysteme 11 (siehe Figur 1), vergleichmäßigt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Der Schutzbereich der Erfindung ist durch die beigefügten Ansprüche definiert.

### Bezugszeichenliste

- 10: Variabler Ventiltrieb
- 11: Schiebenockensystem
- 12: Nockenwelle
- 14: Nockenträger
- 16: Übertragungsvorrichtung (Schlepphebel)
- 20: Erstes Einlassventil
- 22: Zweites Einlassventil
- 24: Erster Aktor
- 26: Zweiter Aktor
- 27: Steuereinheit
- 28: Erster Anschlag
- 30: Zweiter Anschlag
- 32: Erster Nocken
- 34: Zweiter Nocken
- 38: Erster nockenfreier Abschnitt
- 40: Zweiter nockenfreier Abschnitt
- 42: Erste Eingriffsspur
- 44: Zweite Eingriffsspur
- 46: Arretierungsvorrichtung
- 48: Elastisches Element
- 50: Sperrkörper
- 52: Erste Ausnehmung
- 54: Zweite Ausnehmung

- pₘₑ: Effektiver Mitteldruck
- p₁: Erster effektiver Mitteldruck
- p₂: Zweiter effektiver Mitteldruck
- U: Motordrehzahl
- A: Schwachlastbereich
- B: Übergangslastbereich
- C: Mittel- und Volllastbereich
- D: Weiterer Bereich

## Patentansprüche

1. Verfahren zum Steuern eines Verbrennungsmotors mit mehreren Zylindern, die jeweils mindestens ein Einlassventil (20, 22) aufweisen, wobei die Einlassventile (20, 22) zylinderselektiv ansteuerbar sind, aufweisend:
Erfassen mindestens eines Betriebsparameters des Verbrennungsmotors, umfassend einen Betriebsparameter eines Turboladers des Verbrennungsmotors;
Bestimmen einer ausgewählten Anzahl von Zylindern, bei denen ein Vorziehen eines Schließzeitpunkts vor Erreichen eines unteren Totpunkts einer Kolbenbewegung im Einlasstakt, insbesondere eine Miller-Steuerzeit, des jeweils mindestens einen Einlassventils (20, 22) gewünscht ist, basierend auf dem mindestens einen erfassten Betriebsparameter; und
Betreiben des Verbrennungsmotors mit der ausgewählten Anzahl von Zylindern mit vorgezogenem Schließzeitpunkt des jeweils mindestens einen Einlassventils (20, 22),
**dadurch gekennzeichnet, dass**
in einem vorgegebenen Betriebsbereich des Turboladers die Anzahl der ausgewählten Zylinder kleiner als eine Gesamtzahl der mehreren Zylinder und/oder größer Null ist; und/oder
sich die ausgewählte Anzahl von Zylindern in einem vorgegebenen Betriebsbereich des Turboladers mit veränderndem Betriebspunkt des Turboladers verändert.

2. Verfahren nach Anspruch 1, wobei:
in einem vorgegebenen Lastbereich des Verbrennungsmotors und/oder einem vorgegebenen Temperaturbereich des Abgases die Anzahl der ausgewählten Zylinder kleiner als eine Gesamtzahl der mehreren Zylinder und/oder größer Null ist; und/oder
sich die ausgewählte Anzahl von Zylindern in einem vorgegebenen Lastbereich des Verbrennungsmotors und/oder einem vorgegebenen Temperaturbereich des Abgases mit verändernder Last der Verbrennungsmotors und/oder verändernder Temperatur des Abgases verändert.

3. Verfahren nach Anspruch 1 oder Anspruch 2, wobei:
die ausgewählte Anzahl von Zylindern zum variablen Anpassen einer Abgastemperatur, zum variablen Anpassen eines Betriebspunkts des Turboladers und/oder zum variablen Anpassen eines Luftdurchsatzes bestimmt wird; und/oder
die restlichen Zylinder im Normalbetrieb betrieben werden und/oder ein Schließzeitpunkt der Einlassventile der restlichen Zylinder im Bereich des Erreichens des unteren Totpunkts der Kolbenbewegung liegt.

4. Verfahren nach einem der vorherigen Ansprüche, wobei:
die ausgewählte Anzahl von Zylindern in einem Schwachlastbereich des Verbrennungsmotors einer Gesamtzahl der Zylinder entspricht; und/oder
die ausgewählte Anzahl von Zylindern oberhalb von einem Schwachlastbereich des Verbrennungsmotors mit zunehmender Last des Verbrennungsmotors abnimmt.

5. Verfahren nach einem der vorherigen Ansprüche, wobei:
die ausgewählte Anzahl von Zylindern unterhalb von einem Mittellastbereich des Verbrennungsmotors mit abnehmender Last des Verbrennungsmotors zunimmt; und/oder
die ausgewählte Anzahl von Zylindern in einem Übergangslastbereich von einem Schwachlastbereich zu einem Mittellastbereich der Verbrennungsmotors mit zunehmender Last abnimmt und/oder mit abnehmender Last zunimmt.

6. Verfahren nach einem der vorherigen Ansprüche, wobei die ausgewählte Anzahl von Zylindern in einem Volllastbereich des Verbrennungsmotors mit zunehmender Last des Verbrennungsmotors zunimmt und/oder mit abnehmender Last des Verbrennungsmotors abnimmt.

7. Verfahren nach einem der Ansprüche 4 bis 6, wobei:
der Schwachlastbereich in einem Bereich kleiner als 25 %, insbesondere kleiner als 15 %, eines maximalen effektiven Mitteldrucks des Verbrennungsmotors liegt, der Übergangslastbereich in einem Bereich zwischen 5 % und 60 %, insbesondere zwischen 15 % und 50 %, des maximalen effektiven Mitteldrucks des Verbrennungsmotors liegt, der Mittellastbereich in einem Bereich zwischen 40 % und 90%, insbesondere zwischen 50 % und 80 %, des maximalen effektiven Mitteldrucks des Verbrennungsmotors liegt, und/oder der Volllastbereich in einem Bereich größer als 70%, insbesondere größer als 80 %, des maximalen effektiven Mitteldrucks des Verbrennungsmotors liegt; und/oder
der Schwachlastbereich in einem Bereich kleiner als 5 bar, insbesondere kleiner als 4 bar, effektiver Mitteldruck des Verbrennungsmotors liegt, der Mittellastbereich in einem Bereich größer als 6 bar, insbesondere größer als 7 bar, vorzugsweise größer als 8 bar, effektiver Mitteldruck des Verbrennungsmotors liegt, der Übergangslastbereich zwischen dem Schwachlastbereich und dem Mittellastbereich liegt und/oder der Volllastbereich oberhalb des Mittellastbereichs liegt.

8. Verfahren nach einem der vorherigen Ansprüche, wobei:
die ausgewählte Anzahl von Zylindern bei Überschreiten eines Schwellwerts eines Betriebsparameters des Turboladers, bei Betreiben des Turboladers oberhalb eines gewünschten Betriebsbereichs und/oder bei Überschreiten eines Luftdurchsatzschwellwertes zunimmt; und/oder
die ausgewählte Anzahl von Zylindern bei Unterschreiten eines Schwellwerts eines Betriebsparameters des Turboladers, bei Betreiben des Turboladers unterhalb eines gewünschten Betriebsbereichs und/oder bei Unterschreiten eines Luftdurchsatzschwellwertes abnimmt.

9. Verfahren nach einem der vorherigen Ansprüche, wobei:
die ausgewählte Anzahl von Zylindern bei Unterschreiten eines Schwellwerts der Abgastemperatur zunimmt und/oder bei Überschreiten eines Schwellwerts der Abgastemperatur abnimmt;
die ausgewählte Anzahl von Zylindern so bestimmt wird, dass die Abgastemperatur in einem Betriebstemperaturbereich oder einem Regenerationstemperaturbereich einer Abgasnachbehandlungseinrichtung, insbesondere ein Katalysator, vorzugsweise ein SCR-Katalysator und/oder ein Oxidationskatalysator, und/oder ein Partikelfilter, des Verbrennungsmotors liegt.

10. Verfahren nach einem der vorherigen Ansprüche, wobei ein Kraftstoffeinspritzzeitpunkt bei der ausgewählten Anzahl von Zylinder verändert, insbesondere vorgezogen, wird und/oder eine Kraftstoffeinspritzmenge bei der ausgewählten Anzahl von Zylinder verändert, insbesondere verringert, wird.

11. Verfahren nach einem der vorherigen Ansprüche, wobei basierend auf der gewünschten Anzahl von Zylindern eine Gruppe von Zylindern, deren Anzahl der gewünschten Anzahl entspricht, gebildet wird und eine Zuordnung von Zylindern zu der Gruppe rollierend erfolgt.

12. Verfahren nach einem der vorherigen Ansprüche, wobei der Verbrennungsmotor einen variablen Ventiltrieb (10), insbesondere mehrere Schiebenockensysteme (11) für die mehreren Zylinder, aufweist, und mittels des variablen Ventiltriebs (10) eine zylinderselektive Verstellung der Steuerzeiten der Einlassventile (20, 22) zum Betreiben des Verbrennungsmotors mit der ausgewählten Anzahl von Zylindern mit vorgezogenem Schließzeitpunkt des jeweils mindestens einen Einlassventils (20, 22) vorgenommen wird.

13. Verfahren nach Anspruch 12, wobei jedes Schiebenockensystem (11) einen auf einer Nockenwelle (12) des Verbrennungsmotors drehfest und axial verschiebbar angeordneten Nockenträger (14) mit einem ersten Nocken (32) für einen Normalbetrieb und einen in einer Längsrichtung der Nockenwelle (12) versetzt angeordneten zweiten Nocken (34) zum Vorziehen des Schließzeitpunkts des mindestens einen Einlassventils (20, 22) aufweist, wobei das Schiebenockensystem (11) wahlweise den ersten Nocken (32) und das mindestens eine Einlassventil (20, 22) in Wirkverbindung setzt oder den zweiten Nocken (34) und das mindestens eine Einlassventil (20, 22) in Wirkverbindung setzt, wobei der zweite Nocken (34) das mindestens eine Einlassventil (20, 22) früher schließt als der erste Nocken (32).

14. Variabler Ventiltrieb (10) für einen mehrere Zylinder aufweisenden Verbrennungsmotor eines Kraftfahrzeugs, insbesondere Nutzfahrzeugs, aufweisend:
mindestens ein Einlassventil (20, 22) für jeden Zylinder des Verbrennungsmotors;
eine Nockenwelle (12);
mehrere Schiebenockensysteme (11) für die mehreren Zylinder, wobei jedes Schiebenockensystem (11) einen Nockenträger (14), der auf der Nockenwelle (12) drehfest und axial verschiebbar angeordnet ist und einen ersten Nocken (32) und einen zweiten Nocken (34) aufweist, wobei der erste Nocken (32) und der zweite Nocken (34) in einer Längsrichtung der Nockenwelle (21) versetzt angeordnet sind; und
eine Steuereinheit (27), die dazu ausgebildet ist, das Verfahren nach einem der vorherigen Ansprüche durchzuführen.

15. Kraftfahrzeug, insbesondere Nutzfahrzeug, mit einem variablen Ventiltrieb (10) nach Anspruch 14.

## Claims

1. A method for controlling an internal combustion engine with a plurality of cylinders, each comprising at least one intake valve (20, 22), wherein the intake valves (20, 22) can be actuated in a cylinder-selective manner, comprising:
detecting at least one operating parameter of the internal combustion engine, comprising an operating parameter of a turbocharger of the internal combustion engine;
determining a selected number of cylinders in which it is desired to advance a closing time before reaching a bottom dead centre of a piston movement in the intake stroke, in particular a Miller control time, of the respective at least one intake valve (20, 22), based on the at least one detected operating parameter; and
operating the internal combustion engine with the selected number of cylinders with an advanced closing time of the respective at least one intake valve (20, 22), **characterised in that**
in a predetermined operating range of the turbocharger, the number of selected cylinders is less than a total number of the plurality of cylinders and/or greater than zero; and/or
the selected number of cylinders in a predetermined operating range of the turbocharger changes as the operating point of the turbocharger changes.

2. The method according to claim 1, wherein:
in a predetermined load range of the internal combustion engine and/or a predetermined temperature range of the exhaust gas, the number of selected cylinders is less than a total number of the plurality of cylinders and/or greater than zero; and/or
the selected number of cylinders in a predetermined load range of the internal combustion engine and/or a predetermined temperature range of the exhaust gas changes with changing load of the internal combustion engine and/or changing temperature of the exhaust gas.

3. The method according to claim 1 or claim 2, wherein:
the selected number of cylinders is determined for variably adjusting an exhaust gas temperature, for variably adjusting an operating point of the turbocharger and/or for variably adjusting an air flow rate; and/or
the remaining cylinders are operated in normal operation and/or a closing time of the intake valves of the remaining cylinders is in the section of reaching the bottom dead centre of the piston movement.

4. The method according to any of the previous claims, wherein:
the selected number of cylinders in a low load range of the internal combustion engine corresponds to a total number of cylinders; and/or
the selected number of cylinders above a low load region of the internal combustion engine decreases with increasing load of the internal combustion engine.

5. The method according to any of the previous claims, wherein:
the selected number of cylinders below a medium load range of the internal combustion engine increases as the load of the internal combustion engine decreases; and/or
the selected number of cylinders in a transition load range from a low load range to a medium load range of the internal combustion engine decreases with increasing load and/or increases with decreasing load.

6. The method according to any one of the previous claims, wherein the selected number of cylinders in a full load range of the internal combustion engine increases with increasing load of the internal combustion engine and/or decreases with decreasing load of the internal combustion engine.

7. The method according to any one of claims 4 to 6, wherein:
the low load range lies in a range of less than 25%, in particular less than 15%, of a maximum effective mean pressure of the internal combustion engine, the transitional load range lies in a range of between 5% and 60%, in particular between 15% and 50%, of the maximum effective mean pressure of the internal combustion engine, the medium load range lies in a range between 40% and 90%, in particular between 50% and 80%, of the maximum effective mean pressure of the internal combustion engine, and/or the full load range lies in a range greater than 70%, in particular greater than 80%, of the maximum effective mean pressure of the internal combustion engine; and/or
the low load range lies in a range of less than 5 bar, in particular less than 4 bar, effective mean pressure of the internal combustion engine, the medium load range lies in a range of greater than 6 bar, in particular greater than 7 bar, preferably greater than 8 bar, effective mean pressure of the internal combustion engine, the transitional load range lies between the low load range and the medium load range and/or the full load range lies above the medium load range.

8. The method according to one of the previous claims, wherein:
the selected number of cylinders increases when a threshold value of an operating parameter of the turbocharger is exceeded, when the turbocharger is operated above a desired operating range and/or when an air flow rate threshold value is exceeded; and/or
the selected number of cylinders decreases when an operating parameter of the turbocharger falls below a threshold value, when the turbocharger is operated below a desired operating range and/or when an air flow rate threshold is undershot.

9. The method according to one of the previous claims, wherein:
the selected number of cylinders increases when the exhaust gas temperature falls below a threshold value and/or decreases when the exhaust gas temperature exceeds a threshold value;
the selected number of cylinders is determined such that the exhaust gas temperature is in an operating temperature range or a regeneration temperature range of an exhaust gas aftertreatment device, in particular a catalytic converter, preferably an SCR catalytic converter and/or an oxidation catalytic converter, and/or a particulate filter, of the internal combustion engine.

10. The method according to one of the previous claims, wherein a fuel injection timing at the selected number of cylinders is changed, in particular advanced, and/or a fuel injection quantity at the selected number of cylinders is changed, in particular reduced.

11. The method according to one of the previous claims, wherein, based on the desired number of cylinders, a group of cylinders whose number corresponds to the desired number is formed and cylinders are assigned to the group on a rolling basis.

12. The method according to one of the previous claims, wherein the internal combustion engine comprises a variable valve train (10), in particular a plurality of sliding cam systems (11) for the plurality of cylinders, and by means of the variable valve train (10) a cylinder-selective adjustment of the control times of the intake valves (20, 22) for operating the internal combustion engine with the selected number of cylinders is carried out with advanced closing timing of the at least one intake valve (20, 22) in each case.

13. The method according to claim 12, wherein each sliding cam system (11) comprises a cam carrier (14) arranged on a camshaft (12) of the internal combustion engine in a rotationally fixed and axially displaceable manner and having a first cam (32) for normal operation and a second cam (34) arranged offset in a longitudinal direction of the camshaft (12) for advancing the closing time of the at least one intake valve (20, 22), wherein the sliding cam system (11) selectively brings the first cam (32) and the at least one intake valve (20, 22) into operative connection or brings the second cam (34) and the at least one intake valve (20, 22) into operative connection, wherein the second cam (34) closes the at least one intake valve (20, 22) earlier than the first cam (32).

14. A variable valve train (10) for a multi-cylinder internal combustion engine of a motor vehicle, in particular a utility vehicle, comprising:
at least one intake valve (20, 22) for each cylinder of the internal combustion engine;
a camshaft (12);
a plurality of sliding cam systems (11) for the plurality of cylinders, wherein each sliding cam system (11) comprises a cam carrier (14) which is arranged on the camshaft (12) so as to be rotationally fixed and axially displaceable and has a first cam (32) and a second cam (34), wherein the first cam (32) and the second cam (34) are arranged offset in a longitudinal direction of the camshaft (21); and
a control unit (27) configured to perform the method according to one of the previous claims.

15. A motor vehicle, in particular utility vehicle, with a variable valve train (10) according to claim 14.

## Revendications

1. Procédé de commande d'un moteur à combustion interne avec plusieurs cylindres, qui présentent respectivement au moins une soupape d'admission (20, 22), les soupapes d'admission (20, 22) pouvant être commandées sélectivement par cylindre, présentant :
la détection d'au moins un paramètre de fonctionnement du moteur à combustion interne, comprenant un paramètre de fonctionnement d'un turbocompresseur du moteur à combustion interne ;
la détermination d'un nombre de cylindres sélectionnés pour lesquels une avance d'un instant de fermeture avant d'atteindre un point mort bas d'un mouvement de piston dans la course d'admission, notamment un temps de commande de Miller, de l'au moins une soupape d'admission respective (20, 22) est souhaitée, sur la base de l'au moins un paramètre de fonctionnement détecté ; et
le fait de faire fonctionner le moteur à combustion interne avec le nombre de cylindres sélectionnés avec un instant de fermeture avancé de l'au moins une soupape d'admission respective (20, 22),
**caractérisé en ce que**
dans une plage de fonctionnement prédéfinie du turbocompresseur, le nombre de cylindres sélectionnés est inférieur à un nombre total des plusieurs cylindres et/ou supérieur à zéro ; et/ou
le nombre de cylindres sélectionnés varie dans une plage de fonctionnement prédéfinie du turbocompresseur lorsque le point de fonctionnement du turbocompresseur varie.

2. Procédé selon la revendication 1, dans lequel :
dans une plage de charge prédéfinie du moteur à combustion interne et/ou une plage de température prédéfinie des gaz d'échappement, le nombre de cylindres sélectionnés est inférieur à un nombre total des plusieurs cylindres et/ou supérieur à zéro ; et/ou
le nombre de cylindres sélectionnés varie dans une plage de charge prédéfinie du moteur à combustion interne et/ou une plage de température prédéfinie des gaz d'échappement lorsque la charge du moteur à combustion interne varie et/ou lorsque la température des gaz d'échappement varie.

3. Procédé selon la revendication 1 ou la revendication 2, dans lequel :
le nombre de cylindres sélectionnés est déterminé pour ajuster de manière variable une température des gaz d'échappement, pour ajuster de manière variable un point de fonctionnement du turbocompresseur et/ou pour ajuster de manière variable un débit d'air ; et/ou
les cylindres restants fonctionnent en mode de fonctionnement normal et/ou un instant de fermeture des soupapes d'admission des cylindres restants se situe dans la plage d'atteinte du point mort bas du mouvement de piston.

4. Procédé selon l'une quelconque des revendications précédentes, dans lequel :
le nombre de cylindres sélectionnés dans une plage de charge faible du moteur à combustion interne correspond à un nombre total de cylindres ; et/ou
le nombre de cylindres sélectionnés au-dessus d'une plage de charge faible du moteur à combustion interne diminue lorsque la charge du moteur à combustion interne augmente.

5. Procédé selon l'une quelconque des revendications précédentes, dans lequel :
le nombre de cylindres sélectionnés en dessous d'une plage de charge moyenne du moteur à combustion interne augmente lorsque la charge du moteur à combustion interne diminue ; et/ou
le nombre de cylindres sélectionnés dans une plage de charge de transition d'une plage de charge faible à une plage de charge moyenne du moteur à combustion interne diminue lorsque la charge augmente et/ou augmente lorsque la charge diminue.

6. Procédé selon l'une quelconque des revendications précédentes, dans lequel le nombre de cylindres sélectionnés dans une plage de pleine charge du moteur à combustion interne augmente lorsque la charge du moteur à combustion interne augmente et/ou diminue lorsque la charge du moteur à combustion interne diminue.

7. Procédé selon l'une quelconque des revendications 4 à 6, dans lequel :
la plage de charge faible se situe dans une plage inférieure à 25 %, notamment inférieure à 15 %, d'une pression moyenne effective maximale du moteur à combustion interne, la plage de charge de transition se situe dans une plage comprise entre 5 % et 60 %, notamment entre 15 % et 50 %, de la pression moyenne effective maximale du moteur à combustion interne, la plage de charge moyenne se situe dans une plage comprise entre 40 % et 90 %, notamment entre 50 % et 80 %, de la pression moyenne effective maximale du moteur à combustion interne, et/ou la plage de pleine charge se situe dans une plage supérieure à 70 %, notamment supérieure à 80 %, de la pression moyenne effective maximale du moteur à combustion interne ; et/ou
la plage de charge faible se situe dans une plage inférieure à 5 bars, notamment inférieure à 4 bars, de pression moyenne effective du moteur à combustion interne, la plage de charge moyenne se situe dans une plage supérieure à 6 bars, notamment supérieure à 7 bars, de préférence supérieure à 8 bars, de pression moyenne effective du moteur à combustion interne, la plage de charge de transition se situe entre la plage de charge faible et la plage de charge moyenne et/ou la plage de pleine charge se situe au-dessus de la plage de charge moyenne.

8. Procédé selon l'une quelconque des revendications précédentes, dans lequel :
le nombre de cylindres sélectionnés augmente lorsqu'un paramètre de fonctionnement du turbocompresseur dépasse une valeur de seuil, lorsque le turbocompresseur fonctionne au-dessus d'une plage de fonctionnement souhaitée et/ou lorsque le débit d'air dépasse une valeur de seuil ; et/ou
le nombre de cylindres sélectionnés diminue lorsqu'un paramètre de fonctionnement du turbocompresseur passe en dessous d'une valeur de seuil, lorsque le turbocompresseur fonctionne en dessous d'une plage de fonctionnement souhaitée et/ou lorsque le débit d'air passe en dessous d'une valeur de seuil.

9. Procédé selon l'une quelconque des revendications précédentes, dans lequel :
le nombre de cylindres sélectionnés augmente lorsque la température des gaz d'échappement passe en dessous d'une valeur de seuil et/ou diminue lorsque la température des gaz d'échappement dépasse une valeur de seuil ;
le nombre de cylindres sélectionnés est déterminé de telle sorte que la température des gaz d'échappement se situe dans une plage de température de fonctionnement ou une plage de température de régénération d'un dispositif de post-traitement des gaz d'échappement, notamment un catalyseur, de préférence un catalyseur SCR et/ou un catalyseur d'oxydation, et/ou un filtre à particules, du moteur à combustion interne.

10. Procédé selon l'une quelconque des revendications précédentes, dans lequel un instant d'injection de carburant est modifié, notamment avancé, pour le nombre de cylindres sélectionnés et/ou une quantité de carburant injectée est modifiée, notamment réduite, pour le nombre de cylindres sélectionnés.

11. Procédé selon l'une quelconque des revendications précédentes, dans lequel, sur la base du nombre de cylindres souhaités, un groupe de cylindres dont le nombre correspond au nombre souhaité est formé et une affectation de cylindres au groupe s'effectue de manière roulante.

12. Procédé selon l'une quelconque des revendications précédentes, dans lequel le moteur à combustion interne présente un mécanisme de commande de soupapes variable (10), notamment plusieurs systèmes de cames coulissantes (11) pour les plusieurs cylindres, et un réglage sélectif par cylindre des temps de commande des soupapes d'admission (20, 22) est effectué au moyen du mécanisme de commande de soupapes variable (10) pour faire fonctionner le moteur à combustion interne avec le nombre de cylindres sélectionnés avec un instant de fermeture avancé de l'au moins une soupape d'admission respective (20, 22).

13. Procédé selon la revendication 12, dans lequel chaque système de cames coulissantes (11) présente un support de cames (14) agencé sur un arbre à cames (12) du moteur à combustion interne de manière fixe en rotation et mobile en translation axiale, avec une première came (32) pour un fonctionnement normal et une deuxième came (34) agencée en décalage dans une direction longitudinale de l'arbre à cames (12) pour avancer l'instant de fermeture de l'au moins une soupape d'admission (20, 22), le système à cames coulissantes (11) mettant sélectivement la première came (32) et l'au moins une soupape d'admission (20, 22) en liaison fonctionnelle ou la deuxième came (34) et l'au moins une soupape d'admission (20, 22) en liaison fonctionnelle, la deuxième came (34) fermant l'au moins une soupape d'admission (20, 22) plus tôt que la première came (32).

14. Mécanisme de commande de soupapes variable (10) pour un moteur à combustion interne présentant plusieurs cylindres d'un véhicule automobile, notamment d'un véhicule utilitaire, présentant :
au moins une soupape d'admission (20, 22) pour chaque cylindre du moteur à combustion interne ;
un arbre à cames (12) ;
plusieurs systèmes de cames coulissantes (11) pour les plusieurs cylindres, chaque système de cames coulissantes (11) présentant un support de cames (14) qui est agencé sur l'arbre à cames (12) de manière fixe en rotation et mobile en translation axiale et qui présente une première came (32) et une deuxième came (34), la première came (32) et la deuxième came (34) étant agencées en décalage dans la direction longitudinale de l'arbre à cames (21) ; et
une unité de commande (27) configurée pour mettre en œuvre le procédé selon l'une quelconque des revendications précédentes.

15. Véhicule automobile, notamment véhicule utilitaire, avec un mécanisme de commande de soupapes variable (10) selon la revendication 14.
